# EUROPÄISCHE PATENTSCHRIFT

(11) **EP 1 387 974 B1**
(45) Veröffentlichungstag und Bekanntmachung des Hinweises auf die Patenterteilung: **15.09.2004**
(21) Anmeldenummer: 02738419.7
(22) Anmeldetag: 13.05.2002
(51) Int. Cl.: F16K 31/04

(54) **VENTILANTRIEB**
VALVE DRIVE
COMMANDE DE SOUPAPE

(30) Priorität: 15.05.2001 DE 10123705
(43) Veröffentlichungstag der Anmeldung: 11.02.2004
(73) Patentinhaber: Danfoss Trata D.O.O., 1210 Ljubljana Sentvid (SI)
(72) Erfinder: KOSEC, Vojko, 1000 Ljubljana (SI)
(74) Vertreter: Nissen, Georg
(86) Internationale Anmeldenummer: PCT/IB2002/001654
(87) Internationale Veröffentlichungsnummer: WO 2002/093056

(56) Entgegenhaltungen:
- US-A- 2 222 699
- US-A- 2 464 590
- US-A- 4 463 930

## Beschreibung

Die Erfindung betrifft einen Ventilantrieb mit einem Motor, der über ein Getriebe auf eine Betätigungsstange wirkt.

Ein derartiger Ventilantrieb wird beispielsweise verwendet, um größere Ventile auf- oder zuzusteuern. Ein Anwendungsfall derartiger Ventile ist die Steuerung von Heizflüssigkeit für größere Wärmetauscher, die zur Luftbeheizung in Zelten, Hallen oder dergleichen verwendet werden.

Das Ventil weist ein Schließelement auf, das mit Hilfe eines Stößels gegen einen Ventilsitz bewegt werden kann. In Öffnungsrichtung ist das Schließelement von einer Feder belastet. Der Ventilantrieb muß also beim Schließen gegen die Kraft der Feder (oder einer anderen Öffnungskraft) arbeiten, während er beim Öffnen im Grunde nur die Öffnungsbewegung des Schließelements steuern muß, ohne Antriebskräfte aufzubringen.

Um eine Überlastung des Ventilantriebs zu vermeiden, muß der Antrieb aufhören, wenn das Schließelement am Ventilsitz anliegt und sich nicht weiter bewegen kann. Dies läßt sich zwar dadurch erreichen, daß man den Schließweg definiert, den das Schließelement zwischen seiner Öffnungslage und der Schließlage zurücklegt, und diesen Weg einer Steuereinrichtung zur Verfügung stellt, die den Ventilantrieb steuert. Diese Vorgehensweise ist jedoch fehlerbehaftet. Wenn man diesen Stellweg bei der Herstellung des Ventilantriebs fest vorgibt, dann ist der Ventilantrieb nur für wenige Ventile geeignet. Eine Anpassung an verschiedene Ventile, die sich beispielsweise durch ihren Stellweg unterscheiden, ist nur mit relativ großem Aufwand möglich.

US4463930 offenbart einen Ventilantrieb gemäß dem Oberbegriff des Anspruchs 1.

Der Erfindung liegt die Aufgabe zugrunde, einen Ventilantrieb an verschiedene Ventile automatisch anzupassen.

Zur Lösung dieser Aufgabe ist ein Ventilantrieb mit einem Motor vorgesehen, der über ein Getriebe auf eine Betätigungsstange wirkt, wobei das Getriebe eine Kupplung mit zwei Kupplungsteilen aufweist, die über eine Verzahnung und eine Gegenverzahnung miteinander in Eingriff stehen und von denen eines bei einer Relativdrehung der beiden Kupplungsteile axial verlagerbar ist, und mit einem Schalter, der über eine Betätigungsanordnung vom verlagerbaren Teil betätigbar ist.

Bei dieser Ausgestaltung kann der Motor über das Getriebe die Betätigungsstange antreiben und das Schließelement des Ventils auf den Ventilsitz zu bewegen. Wenn das Schließelement am Ventilsitz zur Anlage kommt, dann ist eine Weiterbewegung der Betätigungsstange nicht mehr möglich. Am "Ausgang" des Getriebes entsteht daher ein relativ hohes Gegenmoment. Dieses Gegenmoment führt nun dazu, daß die beiden Kupplungsteile aufgrund des Eingriffs der Verzahnung und der Gegenverzahnung eine Axialbewegung ausführen, die ausgenutzt werden kann, um den Schalter zu betätigen. Die axiale Bewegung ergibt sich dadurch, daß die Zahnflanken der Verzahnung und die Zahnflanken der Gegenverzahnung aneinander gedrückt werden und über die Hangabtriebskraft auf diese beiden Verzahnungen eine in Umfangsrichtung gerichtete Bewegung umsetzen in eine axial gerichtete Bewegung. Der zusätzliche Bauraum, der für diesen "Drucksensor" benötigt wird, ist relativ klein. Man kann diese Kupplung im Getriebe unterbringen, so daß für den Drucksensor keine Anbauteile erforderlich sind. Der Schalter schaltet bei Betätigung den Motor einfach ab, wobei es ausreicht, das Abschalten nur für eine Antriebsrichtung, nämlich die Antriebsrichtung zum Schließen, vorzunehmen. Eine Bewegung des Motors in die andere Richtung zum Öffnen des Ventils wird weiterhin zugelassen. Das Abschalten des Motors hat dabei mehrere Vorteile: Zum einen wird eine Überbelastung des Motors, beispielsweise durch eine Überhitzung, vermieden. Zum anderen besteht nicht die Gefahr, daß die Kupplung durchrutscht und beschädigt wird.

Vorzugsweise weist die Betätigungsstange ein Gewinde auf, auf das eine angetriebene Mutter aufgeschraubt ist, die einen Teil des Getriebes bildet. Mit Hilfe der Gewindeübersetzung zwischen Mutter und Betätigungsstange läßt sich die Rotationsbewegung des Motors mit der erforderlichen Übersetzung in eine translatorische Bewegung der Betätigungsstange umsetzen.

Dabei ist besonders bevorzugt, daß die Mutter eines der beiden Kupplungsteile bildet. Die Mutter bildet gleichzeitig eines der letzten Übertragungsglieder im Getriebe. Dementsprechend ist hier das auf das andere Kupplungsteil wirkende Drehmoment am größten. Folglich ist auch die Spreizbewegung zwischen den beiden Kupplungsteilen relativ leicht zu bewerkstelligen, wenn die beiden Kupplungsteile um eine kleine Strecke gegeneinander verdreht werden. Diese Verdrehung ergibt sich dadurch, daß sich die Mutter auf der Betätigungsstange nicht mehr weiterdrehen kann, wenn die Betätigungsstange aufgrund der Anlage des Schließelements am Ventilsitz blockiert ist. Das Antriebsteil der Kupplung wird hingegen vom Motor noch um eine kleine Strecke weitergedreht, wobei diese Drehung, wie erwähnt, zu der Axialbewegung führt. Die Axialbewegung wiederum betätigt den Schalter und schaltet damit den Motor ab.

Vorzugsweise bildet die Mutter das axial feststehende Kupplungsteil. Die Lage der Mutter in Axialrichtung ist im Grunde immer definiert. Wenn man die Mutter als feststehendes Kupplungsteil verwendet, dann muß die Betätigungsstange beim Betätigen des Schalters nicht bewegt werden, was wiederum zu einer Öffnung des Ventils führen könnte.

Bevorzugterweise weist die Verzahnung zumindest in einer Wirkrichtung Zahnflanken mit zwei Abschnitten auf, wobei die Abschnitte unterschiedliche Steigungen aufweisen. Man kann daher die Axialbewegung zwischen den beiden Kupplungsteilen zeitlich steuern.

In einer bevorzugten Ausgestaltung ist vorgesehen, daß ein vom Zahngrund ausgehender erster Abschnitt eine größere Steigung als ein zweiter Abschnitt an der Zahnspitze aufweist. Die größere Steigung bewirkt bei einer Drehung der beiden Kupplungsteile relativ zueinander zunächst eine relativ rasche Axialbewegung des einen Kupplungsteils gegenüber dem anderen. Die geringere Steigung des zweiten Abschnitts bewirkt dann eine langsamere Bewegung, die aber mit einer größeren Kraft erfolgt, wenn das Antriebsmoment des Kupplungsteils gleich bleibt.

Vorzugsweise weist die Betätigungsanordnung ein Spiel gegenüber dem Schalter auf und der erste Abschnitt der Zahnflanke weist eine Höhe auf, die ausreicht um das Spiel zu überwinden. Die Betätigungsanordnung hält also einen gewissen Abstand vom Schaltpunkt des Schalters. Kleinere Bewegungen, etwa durch Erschütterungen, können noch nicht zu einem Betätigen des Schalters führen. Zum Betätigen ist die Überwindung des Spiels erforderlich. Das "Spiel" bedeutet nicht unbedingt, daß tatsächlich ein Abstand zwischen einzelnen Teilen der Betätigungsanordnung körperlich vorhanden sein muß. Gemeint ist damit ein Weg, den die Betätigungsanordnung zurücklegen muß, um eine Änderung des Schaltzustandes des Schalters zu bewirken. Der erste Abschnitt ist nun so ausgelegt, daß die Betätigungsanordnung am Ende des ersten Abschnitts in die Lage versetzt worden ist, den Schalter zu betätigen. Dies bedeutet nicht, daß der Schalter hier bereits betätigt werden muß, obwohl dies natürlich möglich ist. Die Betätigungsanordnung ist hier vielmehr in einer Art Bereitschaftsstellung. Da die Betätigungsanordnung bzw. einzelne Teile der Betätigungsanordnung im ersten Abschnitt nur verlagert werden, ist bei diesem Abschnitt der Bewegung noch nicht mit größeren Gegenkräften zu rechnen. Die Bewegung, die durch den ersten Abschnitt mit der steilen Steigung verursacht wird, kann daher relativ schnell bei geringen Gegenkräften erfolgen.

Vorzugsweise weist der zweite Abschnitt der Zahnflanke eine Höhe auf, die ausreicht, um den Schalter nach Überwindung des Spiels zu betätigen. Wie oben erwähnt, erfolgt die Bewegung des beweglichen Kupplungsteils dann, wenn der zweite Abschnitt der Zahnflanken in Wirkung kommt, langsamer, aber dafür mit einer größeren Kraft. Die langsamere Bewegung ist ohne weiteres akzeptabel, weil der Schalter kurz vor seiner Betätigung steht. Der Schalter erzeugt bei seiner Betätigung üblicherweise aber eine Gegenkraft. Da der zweite Abschnitt der Zahnflanken flacher ist, wird bei gleichem Antriebsmoment eine entsprechend größere Kraft erzeugt, die zur Betätigung des Schalters ausreicht.

Bevorzugterweise ist die Mutter mit einer Handhabe verbunden und die Verzahnung weist in der anderen Wirkrichtung Zahnflanken mit einer Steigung auf, die kleiner ist als die Steigung des ersten Abschnitts. Gelegentlich möchte man das Ventil auch betätigen, wenn der Ventilantrieb nicht verwendet werden kann. Ein derartiger Fall kann auftreten, wenn der Motor des Ventilantriebs defekt ist oder eine Steuerung ausgefallen ist.

In diesem Fall wirkt die Kupplung als "Rutschkupplung", weil der Motor über das Getriebe ein so hohes Moment in die Kupplung einleitet, daß es durch eine Handbewegung praktisch nicht überwunden werden kann. Wenn ein Benutzer an der Handhabe angreift, um das Ventil zu öffnen oder zu schließen, muß er also ein Moment aufbringen, das sich aus mehreren Komponenten zusammensetzt. Zum einen muß er die Öffnungs- bzw. Schließbewegung des Schließelements des Ventils verursachen. Zum zweiten muß er die Reibung im Gewinde zwischen der Mutter und der Betätigungsstange überwinden. Schließlich muß er ein Moment aufbringen, das ausreicht, um die Kupplung durchrutschen zu lassen. Das Moment, das der Benutzer zum Schließen aufbringen muß, ist größer, als das Moment, das er zum Öffnen aufbringen muß, weil das Schließelement des Ventils in Öffnungsrichtung vorgespannt ist. Man kann nun die Steigung der Zahnflanken in der einen Wirkrichtung und in der anderen Wirkrichtung so aneinander anpassen, daß der Anteil des Moments, der zum Durchrutschen der Kupplung führt, in Schließrichtung kleiner ist als in Öffnungsrichtung. Bei einer entsprechenden Dimensionierung wird daher das Moment, das der Benutzer zum Öffnen des Ventils aufbringen muß, etwa genauso groß, wie das Moment, das der Benutzer zum Schließen des Ventils aufbringen muß.

Vorzugsweise weisen die Zahnflanken der anderen Wirkrichtung eine Steigung auf, die der Steigung des zweiten Abschnitts entspricht. Dies erleichtert die Fertigung.

Bevorzugterweise sind die Verzahnung und die Gegenverzahnung einander komplementär. Die jeweils zusammenwirkende Zahnflanken haben also die gleiche Steigung. Dies gilt auch für die beiden Abschnitte der Zahnflanken in der ersten Wirkrichtung.

Bevorzugterweise weist die Betätigungsanordnung einen Hebel auf, der mit dem verlagerbaren Kupplungsteil zusammenwirkt. Mit Hilfe des Hebels ist eine Bewegungsübersetzung möglich, so daß der "Hub" des verlagerbaren Kupplungsteils nicht direkt auf den Schalter wirken muß und der Schalter trotzdem mit der notwendigen Zuverlässigkeit betätigt werden kann.

Vorzugsweise wirkt der verlagerbare Kupplungsteil auf einen Hebelabschnitt, der kürzer ist als ein Hebelabschnitt, der auf den Schalter wirkt. Dies läßt sich sowohl mit einem einarmigen Hebel als auch mit einem zweiarmigen Hebel realisieren. Mit dem Übersetzungsverhältnis der beiden Hebelabschnitte läßt sich die gewünschte Bewegungsübersetzung erzielen.

Vorzugsweise ist eine Federanordnung vorgesehen, die die beiden Kupplungsteile zusammenhält. Die Federanordnung definiert damit im Grunde das Moment, das erforderlich ist, um ein Ausrücken der beiden Kupplungsteile, genauer gesagt die axiale Bewegung des einen Kupplungsteils gegenüber dem anderen zu bewirken. Man kann nun die von der Federanordnung ausgeübte Kraft so dimensionieren, daß das Ventil sicher geschlossen werden kann, eine Überlastung des Motors und des Getriebes aber verhindert wird.

Die Erfindung wird im folgenden anhand eines bevorzugten Ausführungsbeispiels in Verbindung mit einer Zeichnung beschreiben. Hierin zeigen:
- Fig. 1: einen schematischen Schnitt durch einen Ventilantrieb und
- Fig. 2: eine vergrößerte Ansicht der Verzahnung und der Gegenverzahnung in der Kupplung.

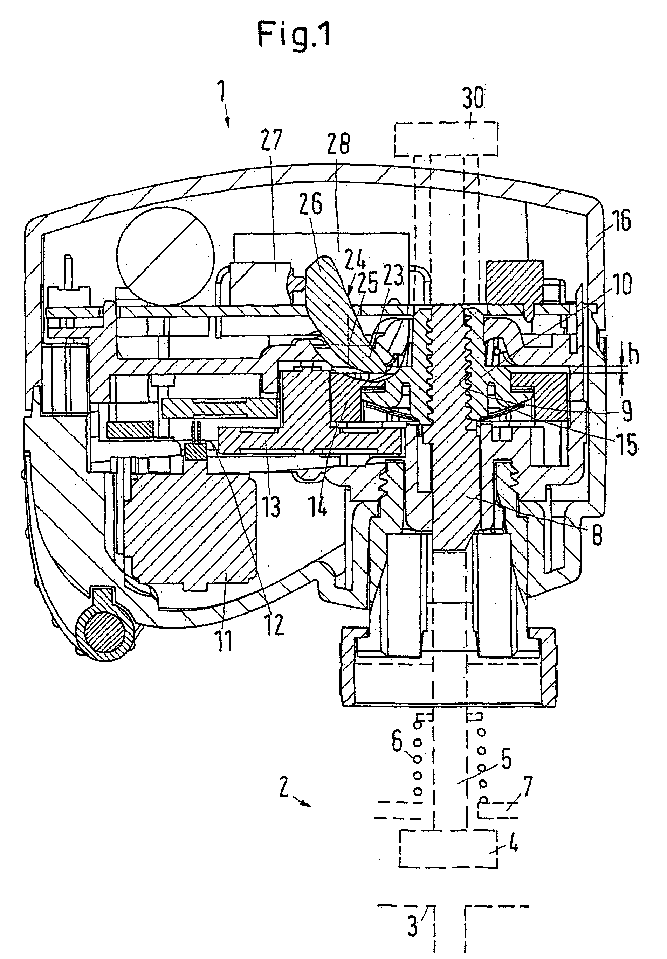

Fig. 1 zeigt einen Ventilantrieb 1, der mit einem nur schematisch und gestrichelt dargestellten Ventil 2 zusammenwirkt. Das Ventil 2 weist einen Ventilsitz 3 auf, gegen den ein Schließelement 4 zur Anlage gebracht werden kann. Ein Abstand zwischen dem Ventilsitz 3 und dem Schließelement 4 bestimmt den freien Strömungsquerschnitt, durch den eine Flüssigkeit strömen kann. Das Schließelement 4 wird durch einen Stößel 5 betätigt. Es wird durch eine Feder 6, die im Ventilgehäuse 7 abgestützt ist in Öffnungsrichtung vorbelastet. Zum Schließen des Ventils, d. h. für eine Bewegung des Schließelements 4 auf den Ventilsitz 3 zu, ist also eine Kraft erforderlich, die ausreicht, um die Kraft der Feder 6 zu überwinden. Für die Steuerung reicht es daher aus, wenn man eine Kraft auf die Stirnseite des Stößels 5 einwirken läßt. Wenn diese Kraft größer ist als die Kraft der Feder 6, wird das Ventil geschlossen. Wenn sie kleiner ist, wird das Ventil geöffnet.

Der Ventilantrieb 1 weist nun eine Betätigungsstange 8 auf, die mit ihrer Stirnseite am Stößel 5 anliegt. Die Betätigungsstange 8 weist ein Außengewinde 9 auf, auf das eine Mutter 10 aufgeschraubt ist. Die Mutter 10 bildet einen Teil eines Getriebes zwischen einem Motor 11 und der Betätigungsstange. Von dem Getriebe sind schematisch Zahnräder 12, 13, 14 dargestellt. Das Getriebe hat eine relativ große Übersetzung, so daß auch bei einer hohen Drehzahl des Motors 11 eine vergleichsweise langsame Bewegung der Betätigungsstange 8 erfolgt. Die Bewegungsrichtung der Betätigungsstange 8 richtet sich nach der Drehrichtung des Motors 11.

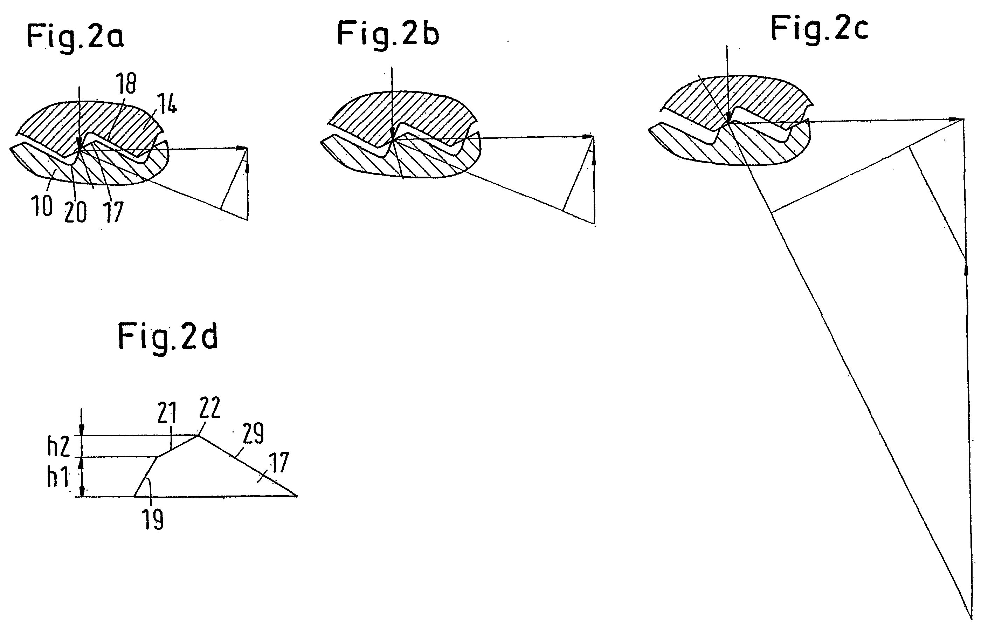

Das Zahnrad 14, d. h. das letzte Zahnrad in einer Kette von Zahnrädern zwischen dem Motor 11 und der Betätigungsstange 8, und die Mutter 10 bilden zusammen eine Kupplung, wobei die Mutter 10 durch eine Federanordnung 15 praktisch ortsfest im Gehäuse 16 des Ventilantriebs 1 gehalten ist. Der Eingriff zwischen Mutter 10 und Zahnrad 14 erfolgt über eine Verzahnung 17 an der Mutter (Fig. 2) und eine entsprechende Gegenverzahnung 18 am Zahnrad 14.

Die Verzahnung 17 und die Gegenverzahnung 18 sind komplementär zueinander ausgebildet, d. h. die Zahnflanken, die aneinander anliegen, haben jeweils die gleiche Steigung.

Bei der Darstellung der Fig. 2 ist eine Situation dargestellt, bei der sich das Zahnrad 14 gegenüber der Mutter 10 von links nach rechts bewegt. Dabei liegen die rechten Zahnflanken des Zahnrades 14 an den linken Zahnflanken der Mutter 10 an. Diese Zahnflanken werden als die Zahnflanken der ersten Wirkrichtung bezeichnet.

In Fig. 2d ist ein Zahn der Verzahnung 17 der Mutter 10 vergrößert herausgezeichnet. Es ist erkennbar, daß die Zahnflanken der ersten Wirkrichtung einen ersten Abschnitt 19, der vom Zahngrund 20 ausgeht, und einen zweiten Abschnitt 21, der der Zahnspitze 22 benachbart ist, aufweist. Der erste Abschnitt 19 ist steiler als der zweite Abschnitt 21, d. h. er weist eine größere Steigung auf. Bei einer Bewegung des Zahnrades 14 relativ zur Mutter 10 gleiten daher die Zähne des Zahnrades 14 zunächst entlang des ersten Abschnitts 19 und dann entlang des zweiten Abschnitts 21, wodurch sich das Zahnrad 14 etwas von der Mutter 10 entfernt. Dies ist möglich, weil im Gehäuse ein Freiraum h existiert, in dem sich das Zahnrad 14 axial bewegen kann.

Bei einer derartigen Bewegung wirkt das Zahnrad auf einen Hebelarm 23 eines Hebels 24, der um eine Achse 25 verschwenkbar ist. Der Hebel 24 weist einen zweiten Hebelarm 26 auf, der länger als der erste Hebelarm 23 ist. Der zweite Hebelarm 26 wirkt mit einem Schalter 27 zusammen, der wiederum mit einer nur schematisch dargestellten Steuereinrichtung 28 verbunden ist. Wenn der Schalter 27 betätigt wird, dann setzt die Steuereinrichtung 28 den Motor 11 still.

Eine nicht näher dargestellte Feder kann vorgesehen sein, um den ersten Hebelarm 23 des Hebels 24 in Anlage an dem Zahnrad 14 zu halten. Der Hebel 24 bildet also eine Betätigungsanordnung für den Schalter 27, die vom Zahnrad 14, der das verlagerbare Teil der Kupplung 10, 14 bildet, betätigbar ist.

Dadurch, daß der Hebel 24 am Zahnrad 14 anliegt, ist es möglich, daß zwischen dem zweiten Hebelarm 26 und dem Schalter 27 ein kleines Spiel besteht, d. h. auch bei kleinen Schwingungen des Hebels 24 besteht nicht die Gefahr, daß der Schalter 27 versehentlich betätigt wird.

Die Zähne der Verzahnung 17 sind nun so dimensioniert, daß der Abschnitt 19 eine Höhe h1 und der Abschnitt 21 eine Höhe h2 aufweisen. Die Höhe h1 ist so gewählt, daß das Spiel zwischen dem zweiten Hebelarm 26 und dem Schalter 27 weitgehend überwunden ist, wenn das Zahnrad 14 durch den ersten Abschnitt 19 der Verzahnung 17 vom Zahnrad 10 weggedrückt worden ist. Aufgrund der relativ großen Steigung des ersten Abschnitts 19 erfolgt die durch diesen Abschnitt 19 gesteuerte Bewegung relativ schnell. Da der Hebel 24 hier noch keine Gegenkräfte überwinden muß, reicht das Moment, mit dem das Zahnrad 14 gedreht wird, aus, um diese Bewegung des Hebels 24 zu veranlassen.

Am Ende des ersten Abschnitts 19 liegt der zweite Hebelarm 26 am Schalter 27 an. Die durch den zweiten Abschnitt 21 gesteuerte Bewegung des Hebels 24 erfolgt langsamer, dafür aber (bei ansonsten unverändertem Drehmoment des Zahnrades 14) mit einer größeren Kraft. Der Hebel 24 ist also in der Lage, den Schalter 27 zu betätigen. Die Kräfteverhältnisse gehen aus einem Vergleich der Figuren 2a bis 2c hervor. In Fig. 2a wirken die ersten Abschnitte 19 der Verzahnungen 17, 18 zusammen. In Fig. 2b ist gerade der Übergang zwischen den beiden Abschnitten 19, 21 erreicht. In Fig. 2c wirken die Abschnitte 21 der Verzahnung 17 und der Gegenverzahnung 18 zusammen.

Die Verzahnung weist für die andere Wirkrichtung eine zweite Zahnflanke 29 auf, die etwa die gleiche Steigung wie der zweite Abschnitt 21 der ersten Zahnflanke hat. Der Hintergrund für diese Steigung ist folgender:

Wie in Fig. 1 schematisch eingezeichnet, ist in manchen Fällen die Mutter 10 mit einer Handhabe 30 verbunden, mit der es möglich ist, die Mutter 10 bei Ausfall des Motors 11 manuell zu verdrehen, um das Ventil 2 zu öffnen oder zu schließen.

Hierbei möchte man erreichen, daß das vom Benutzer aufzubringende Drehmoment in beide Drehrichtungen etwa gleich ist. Dieses Drehmoment setzt sich aus mehreren Komponenten zusammen. Zum einen muß man die Reibung im Gewinde zwischen der Mutter 10 und der Betätigungsstange 8 überwinden. Diese Reibung ist in beiden Drehrichtungen gleich. Die zweite Komponente ergibt sich aus der Kraft, die notwendig ist, um das Schließelement 4 zu bewegen. Diese Kraft ist in Schließrichtung größer als in Öffnungsrichtung, weil in Öffnungsrichtung die Unterstützung durch die Feder 6 dazukommt. Schließlich gibt es eine dritte Komponente, die daraus resultiert, daß man trotz der Verzahnung 17 und der Gegenverzahnung 18 die Mutter 10 relativ gegenüber dem Zahnrad 14 bewegen muß. Das Zahnrad 14 ist im Grunde blockiert, wenn der Motor 11 stillgesetzt ist. Aufgrund des relativ großen Übersetzungverhältnisses des Getriebes ist es praktisch nicht möglich, den Motor 11 zu drehen.

Wenn nun die Mutter 10 gegenüber dem Zahnrad 14 von links nach rechts gedreht wird (bezogen auf die Darstellung der Fig. 2), dann gleiten die Zahnflanken 29 aneinander. Aufgrund der relativ geringen Steigung der Zahnflanken 29 ist für diese Bewegung eine kleinere Kraft erforderlich als bei einer Bewegung in der umgekehrten Richtung, wo die Zahnflanken mit ihren Abschnitten 19 aneinander gleiten. Man kann die Steigungen nun so wählen, daß die Kraftersparnis aufgrund der Zahnflanken 29 etwa genau so groß ist, wie die zusätzliche Kraft, die man aufgrund der Feder 6 bei einer Schließbewegung des Ventils 2 aufwenden muß. Dann ist das von einem Benutzer aufzubringende Drehmoment auf die Handhabe 30 in beiden Drehrichtungen im wesentlichen gleich.

## Patentansprüche

1. Ventilantrieb mit einem Motor, der über ein Getriebe auf eine Betätigungstange (8) wirkt, wobei das Getriebe (10, 12 - 14) eine Kupplung mit zwei Kupplungsteilen (10, 14) aufweist. und von denen eines bei einer Relativdrehung der beiden Kupplungsteile (10, 14) axial verlagerbar ist, und mit einem Schalter (27), der über eine Betätigungsanordnung (24) vom verlagerbaren Teil betätigbar ist, **dadurch gekennzeichnet, daß** die Kupplungsteile (10, 14) über eine Verzahnung (17) und eine Gegenverzahnung (18) miteinander in Eingriff stehen.

2. Ventilantrieb nach Anspruch 1, **dadurch gekennzeichnet, daß** die Betätigungsstange (8) ein Gewinde (9) aufweist, auf das eine angetriebene Mutter (10) aufgeschraubt ist, die einen Teil des Getriebes bildet.

3. Ventilantrieb nach Anspruch 2, **dadurch gekennzeichnet, daß** die Mutter (10) eines der beiden Kupplungsteile bildet.

4. Ventilantrieb nach Anspruch 3, **dadurch gekennzeichnet, daß** die Mutter (10) das axial feststehende Kupplungsteil bildet.

5. Ventilantrieb nach einem der Ansprüche 1 bis 4, **dadurch gekennzeichnet, daß** die Verzahnung (17) zumindest in einer Wirkrichtung Zahnflanken mit zwei Abschnitten (19, 21) aufweist, wobei die Abschnitte (19, 21) unterschiedliche Steigungen aufweisen.

6. Ventilantrieb nach Anspruch 5, **dadurch gekennzeichnet, daß** ein vom Zahngrund (20) ausgehender erster Abschnitt (19) eine größere Steigung als ein zweiter Abschnitt (21) an der Zahnspitze (22) aufweist.

7. Ventilantrieb nach Anspruch 6, **dadurch gekennzeichnet, daß** die Betätigungsanordnung (24) ein Spiel gegenüber dem Schalter (27) aufweist und der erste Abschnitt (19) der Zahnflanke eine Höhe (h1) aufweist, die ausreicht, um das Spiel zu überwinden.

8. Ventilantrieb nach Anspruch 7, **dadurch gekennzeichnet, daß** der zweite Abschnitt (21) der Zahnflanke eine Höhe (h2) aufweist, die ausreicht, um den Schalter (27) nach Überwindung des Spiels zu betätigen.

9. Ventilantrieb nach einem der Ansprüche 1 bis 8, **dadurch gekennzeichnet, daß** die Mutter (10) mit einer Handhabe (30) verbunden ist und die Verzahnung (17) in der anderen Wirkrichtung Zahnflanken (29) mit einer Steigung aufweist, die kleiner ist als die Steigung des ersten Abschnitts (19).

10. Ventilantrieb nach Anspruch 9, **dadurch gekennzeichnet, daß** die Zahnflanken (29) der anderen Wirkrichtung eine Steigung aufweisen, die der Steigung des zweiten Abschnitt (21) entspricht.

11. Ventilantrieb nach einem der Ansprüche 1 bis 10, **dadurch gekennzeichnet, daß** die Verzahnung (17) und die Gegenverzahnung (18) zueinander komplementär sind.

12. Ventilantrieb nach einem der Ansprüche 1 bis 11, **dadurch gekennzeichnet, daß** die Betätigungsanordnung einen Hebel (24) aufweist, der mit dem verlagerbaren Kupplungsteil (14) zusammenwirkt.

13. Ventilantrieb nach Anspruch 12, **dadurch gekennzeichnet, daß** der verlagerbare Kupplungsteil (14) auf einen Hebelabschnitt (23) wirkt, der kürzer ist als ein Hebelabschnitt (26), der auf den Schalter (27) wirkt.

14. Ventilantrieb nach einem der Ansprüche 1 bis 13, **dadurch gekennzeichnet, daß** eine Federanordnung (15) vorgesehen ist, die die beiden Kupplungsteile (10, 14) zusammenhält.

## Claims

1. Valve drive with a motor acting upon an operating rod (8) via a gear, the gear (10, 12 to 14) having a coupling with two coupling parts (10, 14), one of which being axially displaceable by a relative turning of the two coupling parts (10, 14), and with a switch (27), which can be activated by the displaceably part via an activation device (24), **characterised in that** the coupling parts (10, 14) engage in each other via a toothing (17) and a counter-toothing (18).

2. Valve drive according to claim 1, **characterised in that** the operating rod (8) has a thread (9), onto which is screwed a driven nut (10), which is part of the gear.

3. Valve drive according to claim 2, **characterised in that** the nut (10) forms one of the coupling parts.

4. Valve drive according to claim 3, **characterised in that** the nut (10) forms the axially fixed coupling part.

5. Valve drive according to one of the claims 1 to 4, **characterised in that** at least in one operating direction the toothing (17) has tooth flanks with two sections (19, 21), the sections (19, 21) having different inclinations.

6. Valve drive according to claim 5, **characterised in that** a first section (19) originating from the tooth bottom (20) has a larger inclination than a second section (21) at the tooth peak (22).

7. Valve drive according to claim 6, **characterised in that** the operating device (24) has a play in relation to the switch (27) and the first section (19) of the tooth flank has a height (h1), which is sufficient to overcome the play.

8. Valve drive according to claim 7, **characterised in that** the second section (21) of the tooth flank has a height (h2), which is sufficient to activate the switch (27) after overcoming the play.

9. Valve drive according to one of the claims 1 to 8, **characterised in that** the nut (10) is connected with a handle (30) and that in the other operating direction the toothing (17) has tooth flanks (29) with an inclination, which is smaller than the inclination of the first section (19).

10. Valve drive according to claim 9, **characterised in that** the tooth flanks (29) of the second operating direction have an inclination, wich corresponds to the inclination of the second section (21).

11. Valve drive according to one of the claims 1 to 10, **characterised in that** the toothing (17) and the counter-toothing (18) are complementary to each other.

12. Valve drive according to one of the claims 1 to 11, **characterised in that** the operating device has a lever (24), which interacts with the displaceably coupling part (14).

13. Valve drive according to claim 12, **characterised in that** the displaceably coupling part (14) acts upon a lever section (23), which is shorter than a lever section (26), which acts upon the switch (27).

14. Valve drive according to one of the claims 1 to 13, **characterised in that** a spring arrangement (15) is provided, which keeps the two coupling parts (10, 14) together.

## Revendications

1. Commande de soupapes avec un moteur qui agit sur une barre d'actionnement (8) par l'intermédiaire d'un engrenage, l'engrenage (10, 12 - 14) présentant un accouplement avec deux parties d'accouplement (10, 14) dont une peut être déplacée axialement lors d'une rotation relative des deux parties d'accouplement (10, 14), et avec un commutateur (27) pouvant être actionné par la partie déplaçable par l'intermédiaire d'une disposition d'actionnement (24), **caractérisée en ce que** les parties d'accouplement (10, 14) sont en prise l'une avec l'autre par l'intermédiaire d'une denture (17) et d'une contre-denture (18).

2. Commande de soupapes selon la revendication 1, **caractérisée en ce que** la barre d'actionnement (8) présente un filetage (9) sur lequel est vissé un écrou entraîné (10) qui forme une partie de l'engrenage.

3. Commande de soupapes selon la revendication 2, **caractérisée en ce que** l'écrou (10) forme l'une des deux parties d'accouplement.

4. Commande de soupapes selon la revendication 3, **caractérisée en ce que** l'écrou (10) forme la partie d'accouplement axialement fixe.

5. Commande de soupapes selon l'une quelconque de revendications 1 à 4, **caractérisée en ce que** la denture (17) présente, au moins dans un sens actif, des flancs de dent avec deux tronçons (19, 21), les tronçons (19, 21) présentant des pentes différentes.

6. Commande de soupapes selon la revendication 5, **caractérisée en ce qu'**un premier tronçon (19) partant de la base des dents (20) présente une pente plus grande qu'un deuxième tronçon (21) à la pointe des dents (22).

7. Commande de soupapes selon la revendication 6, **caractérisée en ce que** la disposition d'actionnement (24) présente un jeu par rapport au commutateur (27) et le premier tronçon (19) du flanc de dent une hauteur (h1) qui suffit pour surmonter le jeu.

8. Commande de soupapes selon la revendication 7, **caractérisée en ce que** le deuxième tronçon (21) du flanc de dent présente une hauteur (h2) qui suffit pour actionner le commutateur (27) après avoir surmonté le jeu.

9. Commande de soupapes selon l'une quelconque des revendications 1 à 8, **caractérisée en ce que** l'écrou (10) est relié à un élément de manoeuvre (30) et la denture (17) présente, dans l'autre sens actif, des flancs de dents (29) ayant une pente plus faible que la pente du premier tronçon (19).

10. Commande de soupapes selon la revendication 9, **caractérisée en ce que** les flancs de dents (29) de l'autre sens actif présentent une pente qui correspond à la pente du deuxième tronçon (21).

11. Commande de soupapes selon l'une quelconque des revendications 1 à 10, **caractérisée en ce que** la denture (17) et la contre-denture (18) sont complémentaires entre elles.

12. Commande de soupapes selon l'une quelconque des revendications 1 à 11, **caractérisée en ce que** la disposition d'actionnement présente un levier (24) qui interagit avec la partie d'accouplement (14) déplaçable.

13. Commande de soupapes selon la revendication 12, **caractérisée en ce que** la partie d'accouplement déplaçable (14) agit sur un tronçon de levier (23) qui est plus court qu'un tronçon de levier (26) qui agit sur le commutateur (27).

14. Commande de soupape selon l'une quelconque des revendications 1 à 13, **caractérisée en ce qu'**une disposition de ressorts (15) est prévue qui maintient les deux parties d'accouplement (10, 14) ensemble.
